# EUROPEAN PATENT SPECIFICATION

(11) **EP 0 744 810 B1**
(45) Date of publication and mention of the grant of the patent: **08.09.1999**
(21) Application number: 96201294.4
(22) Date of filing: 10.05.1996
(51) Int. Cl.: H02J 3/14, H02J 13/00

(54) **A device for setting the priority of an electrical socket**
Einrichtung zur Einstellung der Priorität einer elektrischen Steckdose
Dispositif pour l'introduction de la priorité d'une prise électrique

(30) Priority: 22.05.1995 IT MI951039
(43) Date of publication of application: 27.11.1996
(73) Proprietor: BTICINO S.P.A., 20154 Milano (IT)
(72) Inventor: Fabrizi, Fabrizio, 24100 Bergamo (IT)
(74) Representative: Maggioni, Claudio

(56) References cited:
- FR-A- 2 464 588
- US-A- 4 100 426
- US-A- 4 771 185
- US-A- 5 218 552

## Description

The present invention relates to a system for controlling electrical loads in an electrical-energy distribution installation in a habitable environment and to devices for setting the priorities of the electrical sockets of the installation.

The priority of a socket means the degree of importance which the central control unit of the system attributes to the socket in comparison with the other sockets of the installation in order to determine whether the socket should be activated or not in view of limitations imposed in the supply of electrical-energy.

The general object of a system of this type is in fact to exclude electrical loads which are considered less important as a result of events such as, for example, the reaching of a predetermined instantaneous consumption close to the contractual supply limit.

The sockets are associated with peripheral units connected to the central unit by means suitable for communicating digital data, such as "dedicated" lines or conveyed-wave communication systems which use the electrical-energy distribution network for the transmission of data.

In known systems, the priorities of the sockets are set in the central unit by the closure of contacts, by the operation of selectors or by programming by means of information-technology tools (keyboards and display units) as disclosed in US-A-4 771 185 or in the individual sockets by means of selectors associated therewith. In US-A-4 100 426 priorities are assigned in control elements which control power supply to individual loads.

In the first case, the setting may be inconvenient because the central unit is usually located in service areas (storerooms, basements) separate from the areas in which the sockets are installed, and the connection between the socket and the load controlled is often not very clear. Programming by means of a keyboard and display unit may prevent this problem but imposes a high initial cost on the system and, in any case, is quite complex and thus not suitable for simpler applications and is not within the capabilities of the ordinary user.

In the second case, there are problems of poor accessibility when the socket is installed close to the floor, or of exposure to inadvertent operation if the socket is fitted in an easily accessible place. Moreover, the priority-setting operation may be obstructed by the presence of pins and cables or may be carried out thoughtlessly by someone who does not know the purpose of the operation or the characteristics of the installation (load limits, loads connected, services offered, etc.).

The object of the present invention is to propose a device for setting the priorities of the sockets which is simple, inexpensive and prevents the risk of inadvertent or careless operation.

Another object is to propose a system for controlling electrical loads of an installation which advantageously uses devices of this type.

These objects are achieved by the provision of the device and the system defined and characterized in general in the first and in the seventh, respectively, of the claims following the present description.

The invention will be understood better from the following detailed description of an embodiment thereof given by way of non-limiting example with reference to the appended drawings, in which:
Figure 1 shows schematically an electrical installation with a system for controlling electrical loads according to the invention,
Figure 2 is a block diagram of an electronic control unit for an electrical socket,
Figure 3 is a plan view of an electrical socket associated with a device according to the invention, and
Figure 4 is a perspective view of an embodiment of the device according to the invention and of a pincer for the operation thereof.

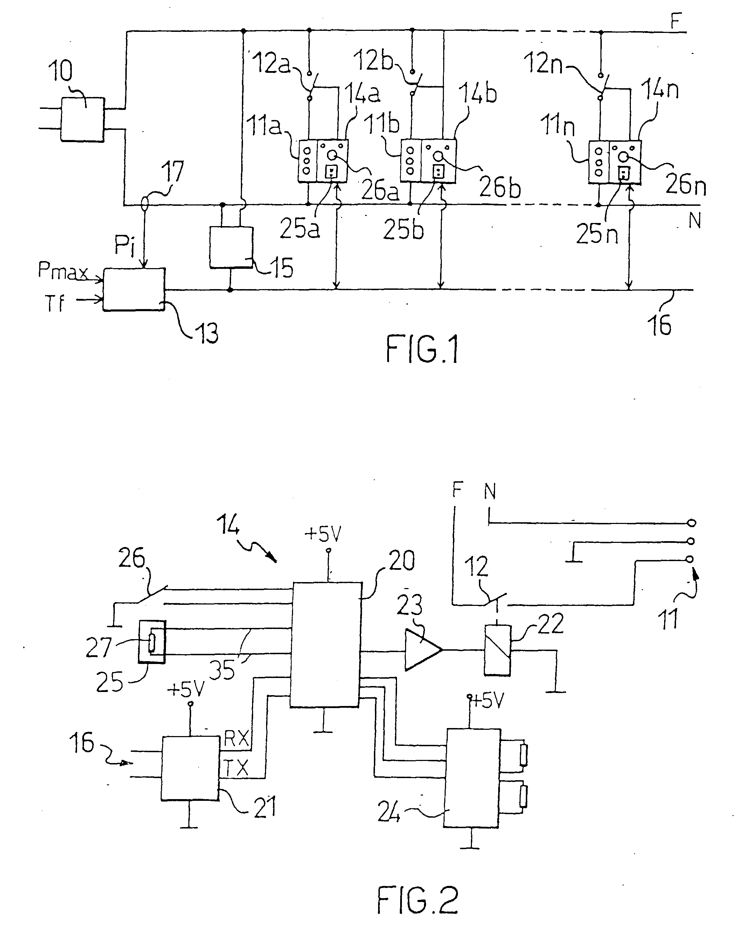

With reference, in particular, to Figure 1, the installation comprises a single-phase distribution line having a neutral wire N and a phase wire F which are connected to a control panel, generally indicated 10, connected to the main electrical-energy distribution network. The control panel 10, of known type, contains a counter, a main switch and safety switches, not shown.

Various sockets, indicated 11a, 11b, ... 11n, are connected to the line between the wires N and F by means of the same number of connection means shown as switches 12a, 12b, ... 12n.

The installation also includes a system for controlling the electrical loads, with a central electronic control unit 13, a plurality of peripheral electronic control units 14a, 14b, ... 14n each associated with a socket in this embodiment and having respective priority-level setting devices 25a, 25b, ... 25n and respective time band-selectors 26a, 26b, 26n, a low-voltage direct-current supply 15, and data-transmission means constituted by a bifilar line which, for simplicity, is represented by a single line 16 in Figure 1, and to which the peripheral units 14a, 14b, ... 14n, the central unit 13 and the supply 15 are connected.

The central unit 13 receives input data relating to the maximum power Pmax which can be supplied to the installation on the basis of the contract between the distributing body and the user and any other data, for example, the tariffs in force, indicated Tf. These data can be supplied by the distributor body on the network by the transmission of conveyed waves and, in this case, the central unit will be connected to the line F, N by means of a suitable decoder, or they may be set manually, for example, by means of a suitable selector on the central unit 13. The maximum current, rather than the maximum power, may be set as the quantity representative of the maximum power which can be supplied to the installation.

The system also includes a device, indicated 17, for measuring an electrical quantity, for example, the current, which is indicative of the instantaneous power absorbed, the device being connected to the central unit 13 in order to supply it with a corresponding signal. This device may also be the device which is normally associated with the counter present on the control panel 10.

The supply 15 draws energy from the distribution line F, N and serves to supply the electronic circuits of the various peripheral units 14a, 14b, ... 14n with the direct-current voltage necessary for their operation.

As shown in Figure 2, each peripheral unit 14 comprises a microcontroller 20. This is connected to the line 16 by means of a modem 21 and to the switch 12 of a socket 11 by means of a relay coil 22, which is piloted by a power amplifier 23. Upstream of the modem 21 is a voltage regulator, not shown, which can supply a stabilized low-voltage direct-current (+ 5V) for the circuits of the unit 14. A configurator circuit 24 is connected to the microcontroller 20 to supply it with address data which identify the peripheral unit. A device 25 according to the invention is connected to the microcontroller 20 in order to supply it with data relating to the priority level to be assigned to the unit 14 and hence to the associated socket 11. A selector 26 is also connected to the microcontroller 20 for setting the time band (in this case two possible time bands) which set the conditions for the enabling of the unit.

The setting device 25 and the selector 26 are mounted near the associated socket in a single structural unit, as in the embodiment shown in Figure 1, or even in a position which is remote from the socket but is more easily accessible. In the latter case, the peripheral unit will also preferably be located in this position, together with the setting device and the time-band selector. As already stated, two or more sockets may also be associated with the same peripheral unit; in this case, the coil 22 will simultaneously control the activation or de-activation of all of the associated sockets.

The microcontroller 20 sends signals containing address and priority-level data on the transmission line, by means of the modem 21 and receives signals containing address and activation or de-activation data by means of the same modem 21.

The central control unit 13 comprises, essentially, a microcontroller which processes the data input, that is the maximum power Pmax, or the maximum current, the instantaneous power absorbed Pi, or the instantaneous current, the addresses of the peripheral units, and the respective priority-level and time-band data, according to a predetermined algorithm, and outputs on the data-transmission line 16 signals containing address and activation or de-activation data in order to activate or de-activate sockets so as always to supply the maximum power required by the system, as far as the maximum power set allows. For example, if the power required is greater than that set, which may be the power available by contract or a lower power, the central control unit adjusts the power requirement to that available by disconnecting loads, starting with those with lowest priority and with gradually increasing priority, seeking to keep in service the loads which the user has identified as most important. The user may also set a certain device, and hence a certain socket, to be supplied only when a particular tariff is active, by appropriate operation of the time-band selector of the peripheral unit with which the socket is associated. Time-programming means are provided inside or outside the microcontroller for this purpose in order to prevent the socket or sockets associated with the peripheral unit being switched on in predetermined time intervals defined by the time bands.

If, instead of charging different tariffs for different time bands, the electrical-energy distributor body transmits tariff data which may vary on the basis of time but also on the basis of other criteria, tariff data selectors, that is, configurator devices which may be similar to those for setting the priority, may be provided instead of the time-band selectors.

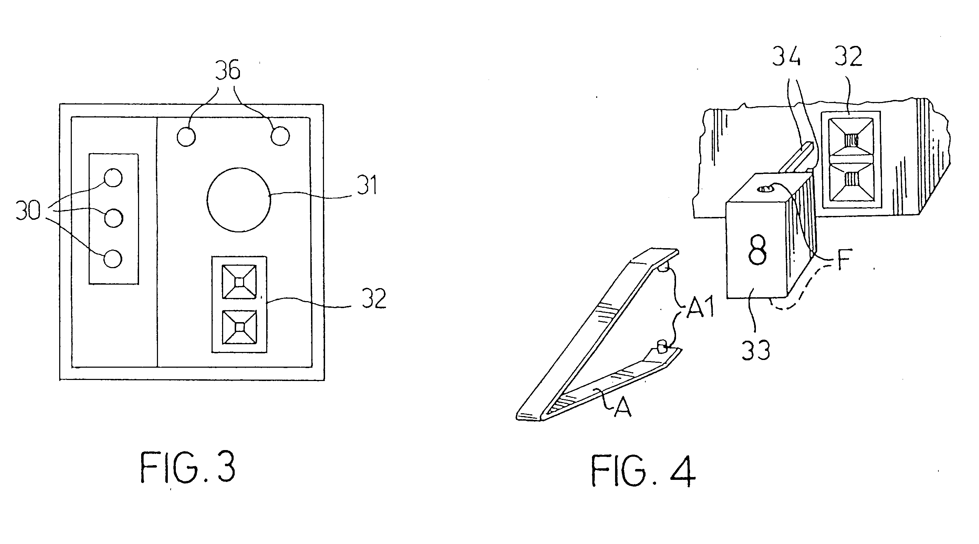

Figure 3 shows schematically the front wall of a structural unit comprising a peripheral unit and an electrical socket associated therewith. Of the socket 11, 3 holes 30 for the insertion of pins are visible, of the time-band selector 26, a push-button switch 31 is visible, and of the priority-setting device 15, a connection element with two holes 32 in which the electrical terminals 35 of the microcontroller 20 (Figure 2) are disposed is visible.

On the front wall there are also two indicator lamps 36 connected to the microcontroller 20 in a manner not shown in order to indicate the operative state of the socket.

As shown in Figure 4, the priority-setting device 25 according to the invention also comprises a block 33 of insulating material, for example, an epoxy resin, which has two electrical terminals 34 for engaging in the holes of the connection element 32. The block 33 incorporates a resistor, indicated 27 in Figure 2, connected between the terminals 34.

Various blocks 33 containing different resistances are provided for setting different priority levels. Suitable circuits supply the microcontroller 20 with different priority-level data for transmission to the central unit 13 for each resistance.

According to a variant, the blocks 33 have more than two electrical terminals and, instead of resistors with different resistances, contain bridges which join two or more terminals together electrically. A series of blocks is thus obtained with different internal connections which define corresponding priority levels in coded form.

When a block is inserted with its terminals in the connection element 32 the priority level to be attributed to the associated socket is unequivocally defined.

More generally, the blocks could contain components other than the resistors and the bridges, such as capacitors, inductors or more or less complex electronic circuits which can define predetermined electrical characteristics between their electrical terminals. These characteristics are different for each block so as to achieve a different configuration of the peripheral unit for each priority level associated with the block connected to the microcontroller at the time in question.

Each block has, on its surface, a graphic symbol (a number in the embodiment shown), a colour, or a combination of colours which enables the priority level associated therewith to be identified easily.

The blocks may be formed so as to have projections or recesses or other means for facilitating their handling, particularly their insertion in the connection element and their removal therefrom. It is advantageous, however, for these means to be such as to discourage careless operation. In the embodiment shown, the block has two opposed holes F in which the teeth A1 of a suitable pincer A can be engaged.

If, as already mentioned, configurator devices for the selection of tariff data are provided instead of time-band selectors, these may advantageously be incorporated in the same block which serves for the priority setting. Naturally, in this case, the connection element will be modified correspondingly.

The advantages of the invention are clear from the foregoing description: simplicity, low cost, ease of setting of the desired priority and immediate identification thereof. Protection against undesired operation can be ensured by a suitable shape of the blocks, that is, of the handling means thereof. Moreover, the fact that setting devices can be formed separately from the socket controlled enables them to be located and operated in the most convenient and suitable positions.

## Claims

1. A device (25) for setting the priority of an electrical socket in an electrical installation comprising a system for controlling electrical loads by means of a central processing and control unit (13) and a plurality of peripheral units (14a, 14b ... 14n) each associated with at least one electrical socket (11) of the installation, characterized in that the device (25) comprises a block of insulating material (33) with at least two electrical terminals (34) which, in use, can be coupled releasably to corresponding electrical terminals (35, 32) of one (14) of the peripheral units, means (27) inside the block (33) for defining a predetermined electrical characteristic between the electrical terminals (34) of the block, the electrical characteristic bringing about, when the block is coupled, in use, to the peripheral unit, a configuration of the peripheral unit corresponding to a predetermined priority level of the socket or sockets (11) associated therewith, and means visible on the block (33) for identifying the priority level.

2. A device (25) according to Claim 1 for a system for controlling electrical loads with at least one peripheral unit (14) comprising a tariff data selector, in which the means (27) inside the block (33) bring about, when the block is coupled, in use, to the peripheral unit, a configuration of the peripheral unit corresponding to a predetermined selection of tariff data.

3. A device (25) according to Claim 1 or Claim 2, in which the block (33) has two electrical terminals (34) and the means (27) inside the block consist of a resistor (27).

4. A device (25) according to Claim 1 or Claim 2, in which the block (33) has more than two electrical terminals and the means (27) inside the block are constituted by at least one bridge which joins two terminals together electrically.

5. A device (25) according to any one of the preceding claims, in which the identification means are constituted by a colour code.

6. A device (25) according to any one of the preceding Claims 1 to 4, in which the identification means are constituted by a graphic symbol.

7. A system for controlling electrical loads of an installation by means of a central processing and control unit (13) and a plurality of peripheral units (14a, 14b ... 14n) each associated with at least one electrical socket (11) of the installation, in which at least one (14) of the peripheral units has terminals (35,32) to which, in use, terminals (34) of a device (25) according to any one of the preceding claims can be releasably coupled to configure the peripheral unit (14).

8. A system according to Claim 7, in which at least one (14) of the peripheral units comprises a selector (26,31) for selecting the time band for the activation of the associated socket or sockets (11).

9. A system according to Claim 7 or Claim 8, in which at least one (14) of the peripheral units comprises at least one member (36) for indicating the operative state of the unit.

10. A system according to any one of Claims 7, 8 and 9, in which at least one (14) of the peripheral units is mounted in the same structural unit which contains at least one (11, 30) of the sockets with which the peripheral unit is associated.

## Patentansprüche

1. Eine Vorrichtung (25) zum Einstellen der Priorität einer elektrischen Steckdose in einer elektrischen Installation, die ein System zum Steuern von elektrischen Lasten mittels einer zentralen Verarbeitungs- und Steuereinheit (13) und eine Mehrzahl von Peripherieeinheiten (14a, 14b ... 14n) aufweist, wobei jede zumindest einer elektrischen Steckdose (11) der Installation zugeordnet ist, dadurch gekennzeichnet, daß die Vorrichtung (25) folgende Merkmale aufweist: einen Block aus isolierendem Material (33) mit zumindest zwei elektrischen Anschlüssen (34), die im Gebrauch mit entsprechenden elektrischen Anschlüssen (35, 32) von einer (14) der Peripherieeinheiten lösbar gekoppelt werden können, eine Einrichtung (27) innerhalb des Blocks (33) zum Definieren einer vorbestimmten elektrischen Charakteristik zwischen den elektrischen Anschlüssen (34) des Blocks, wobei die elektrische Charakteristik eine Konfiguration der Peripherieeinheit, die einem vorbestimmten Prioritätspegel der Steckdose oder der Steckdosen (11), die derselben zugeordnet sind, entspricht, verursacht, wenn der Block im Gebrauch mit der Peripherieeinheit gekoppelt ist, und eine Einrichtung, die auf dem Block (33) sichtbar ist, zum Identifizieren des Prioritätspegels.

2. Eine Vorrichtung (25) nach Anspruch 1 für ein System zum Steuern elektrischer Lasten mit zumindest einer Peripherieeinheit (14), die eine Tatifdatenauswahleinrichtung aufweist, wobei die Einrichtung (27) innerhalb des Blocks (33) eine Konfiguration der Peripherieeinheit, die einer vorbestimmten Auswahl von Tarifdaten entspricht, verursacht, wenn der Block im Gebrauch mit der Peripherieeinheit gekoppelt ist.

3. Eine Vorrichtung (25) nach Ansprch 1 oder Anspruch 2, bei der der Block (33) zwei elektrische Anschlüsse (34) hat, und die Einrichtung (27) innerhalb des Blocks aus einem Widerstand (27) besteht.

4. Eine Vorrichtung (25) nach Anspruch 1 oder Anspruch 2, bei der der Block (33) mehr als zwei elektrische Anschlüsse hat und die Einrichtung (27) innerhalb des Blocks aus zumindest einer Brücke besteht, die zwei Anschlüsse miteinander elektrisch verbindet.

5. Eine Vorrichtung (25) nach einem der vorhergehenden Ansprüche, bei der die Identifikationseinrichtung aus einem Farbcode besteht.

6. Eine Vorrichtung (25) nach einem der vorhergehenden Ansprüche 1 bis 4, bei der die Identifikationseinrichtung aus einem Grafiksymbol besteht.

7. Ein System zum Steuern von elektrischen Lasten einer Installation mittels einer zentralen Verarbeitungs- und Steuereinheit (13) und einer Mehrzahl von Peripherieeinheiten (14a, 14b ... 14n), wobei jede zumindest einer elektrischen Steckdose (11) der Installation zugeordnet ist, wobei zumindest eine (14) der Peripherieeinheiten Anschlüsse (35, 32) hat, mit denen im Gebrauch Anschlüsse (34) einer Vorrichtung (25) gemäß einem der vorhergehenden Anschlüsse lösbar gekoppelt werden kann, um die Peripherieeinheit (14) zu konfigurieren.

8. Ein System nach Anspruch 7, bei dem zumindest eine (14) der Peripherieeinheiten eine Auswahleinrichtung (26, 31) zum Auswählen des Zeitbands für die Aktivierung der zugeordneten Steckdose oder der zugeordneten Steckdosen (11) aufweist.

9. Ein System nach Anspruch 7 oder Anspruch 8, bei dem zumindest eine (14) der Peripherieeinheiten zumindest ein Bauglied (36) zum Anzeigen des Betriebszustands der Einheit aufweist.

10. Ein System nach einem der Ansprüche 7, 8 und 9, bei dem zumindest eine (14) der Peripherieeinheiten in der gleichen strukturellen Einheit angebracht ist, die zumindest eine (11, 30) der Steckdosen aufweist, die der Peripherieeinheit zugeordnet sind.

## Revendications

1. Dispositif (25) pour établir la priorité d'une prise électrique dans une installation électrique comportant un système destiné à commander des charges électriques au moyen d'une unité centrale (13) de traitement et de commande et de plusieurs unités périphériques (14a, 14b ... 14n) associées chacune à au moins une prise électrique (11) de l'installation, caractérisé en ce que le dispositif (25) comporte un bloc de matière isolante (33) avec au moins deux bornes électriques (34) qui, lors de l'utilisation, peuvent être accouplées de façon amovible à des bornes électriques correspondantes (35, 32) de l'une (14) des unités périphériques, un moyen (27) à l'intérieur du bloc (33) pour définir une caractéristique électrique prédéterminée entre les bornes électriques (34) du bloc, la caractéristique électrique déterminant, lorsque le bloc est accouplé, lors de l'utilisation, à l'unité périphérique, une configuration de l'unité périphérique correspondant à un niveau de priorité prédéterminé de la prise ou des prises (11) qui lui sont associées, et un moyen visible sur le bloc (33) pour identifier le niveau de priorité.

2. Dispositif (25) selon la revendication 1 pour un système destiné à commander des charges électriques avec au moins une unité périphérique (14) comportant un sélecteur de données de tarif, dans lequel les moyens (27) à l'intérieur du bloc (33) déterminent, lorsque le bloc est accouplé, lors de l'utilisation, à l'unité périphérique, une configuration de l'unité périphérique correspondant à une sélection prédéterminée de données de tarif.

3. Dispositif (25) selon la revendication 1 ou la revendication 2, dans lequel le bloc (33) comporte deux bornes électriques (34) et les moyens (27) à l'intérieur du bloc consistent en une résistance (27).

4. Dispositif (25) selon la revendication 1 ou 2, dans lequel le bloc (33) comporte plus de deux bornes électriques et les moyens (27) à l'intérieur du bloc sont constitués par au moins un pont qui relie électriquement deux bornes entre elles.

5. Dispositif (25) selon l'une quelconque des revendications précédentes, dans lequel les moyens d'identification sont constitués par un code de couleur.

6. Dispositif (25) selon l'une quelconque des revendications précédentes 1 à 4, dans lequel les moyens d'identification sont constitués par un symbole graphique.

7. Système pour commander des charges électriques d'une installation au moyen d'une unité centrale (13) de traitement et de commande et de plusieurs unités périphériques (14a, 14b ... 14n) associées chacune à au moins une prise électrique (11) de l'installation, dans lequel au moins l'une (14) des unités périphériques comporte des bornes (35, 32) auxquelles, lors de l'utilisation, des bornes (34) d'un dispositif (25) selon l'une quelconque des revendications précédentes peuvent être accouplées de façon amovible pour configurer l'unité périphérique (14).

8. Système selon la revendication 7, dans lequel au moins l'une (14) des unités périphériques comporte un sélecteur (26, 31) destiné à sélectionner le créneau horaire pour l'activation de la prise ou des prises associées (11).

9. Système selon la revendication 7 ou la revendication 8, dans lequel au moins l'une (14) des unités périphériques comporte au moins un élément (36) destiné à indiquer l'état de fonctionnement de l'unité.

10. Système selon l'une quelconque des revendications 7, 8 et 9, dans lequel au moins l'une (14) des unités périphériques est montée dans la même unité structurelle qui contient au moins l'une (11, 30) des prises à laquelle l'unité périphérique est associée.
